# EUROPEAN PATENT APPLICATION

(11) **EP 2 913 315 A1**
(43) Date of publication of application: **02.09.2015**
(21) Application number: 14157226.3
(22) Date of filing: 28.02.2014
(51) Int. Cl.: C04B 26/04, C04B 26/08, C04B 26/28, C04B 111/00, C04B 111/52

(54) **Process for manufacturing an acoustic element and an acoustic element thereof**

(71) Applicant: Acoustic Group OY, 02650 Espoo (FI)
(72) Inventor: SAASTAMOINEN, Tomi, 02650 Espoo (FI); SILFVERHUTH, Esa, 01300 Vantaa (FI)
(74) Representative: Seppo Laine Oy

(57) **Abstract**

The present invention relates to a manufacturing method of acoustic elements and elements thereof, which are based on perforated gypsum plasterboards coated with an acoustic mass. The combination of the present invention, i.e. gypsum plasterboard with a high perforation rate together with an acoustic mass layer, which fills the holes of said gypsum plasterboard, provides a light-weighted and rigid element with excellent acoustic properties in a wide frequency level range.

## Description

### Field of the invention

The present invention relates to acoustic elements that can be used as a part of an interior wall or a ceiling of a space to adjust the acoustic properties of the space in question, and to a manufacturing method of such acoustic elements.

### Description of prior art

When designing and constructing interior wall and ceiling structures increasingly more attention is paid to the acoustics of the space. Naturally, functioning acoustics are a prerequisite, for example, in concert halls, but the acoustics also have significant impacts on the levels of satisfaction, work efficiency, and even human health, for example, in homes, schools, and workplaces. Since structural solutions cannot be selected on the terms of acoustics alone, different elements or surfaces, which are installed in these spaces and particularly on the wall and ceiling surfaces of any rooms after the actual construction stage, are needed.

Consequently, more attention than before is paid to noise levels, i.e., sound absorption in the vicinity of machines that are running.

A primary functional requirement for any acoustic surface or element is naturally that it has suitable acoustic properties. Generally, this signifies a sound absorption that is sufficiently strong or has a frequency response of a suitable form.

Since the acoustic elements and surfaces are structures that remain in sight, their architectural image should, however, also be suitable for their environment and the other surfaces of the space. The thickness of the panel or surface should remain within reasonable limits, mainly due to the increasing weight obtained with higher thicknesses, which on the other hand is inconsistent with the high requirement of sound absorption, as a stronger sound absorption is obtained with higher thicknesses.

The most common commercially available, ready-made acoustic elements include mineral wool-based (fibreglass or rock wool-based) acoustic panels. On the visible surfaces of these, the surface of the mineral wool is coated, for example with paper, plastic, fabric or glass fleece. Being relatively light-weight components, these acoustic elements, which are based on insulating wool panels, are simple to install, for example on the ceiling or interior walls of the space that is to be provided with sound absorption. They are installed either as separate elements or as an unbroken surface. They can also be formed into acoustic planes that are lowered down from the ceiling.

The wool panel of these prior solutions should also be properly covered on the surfaces of its edges, both due to its appearance and to prevent any mineral dust from being released into the surrounding space. With time, the seams of these panels will darken and, thus, become visible. A film coating is therefore not sufficient, but in practise, in the case of separate acoustic elements, cover strips or the like are used, which complicate the manufacture and installation of the element and increase the costs.

The sound absorption ability of mineral wool is moderate, but particularly at low frequencies an efficient absorption may require an impractically thick panel. In conventional cases, absorption structures with a thickness of about 50 mm are functional, but in demanding spaces, layers of over 100 mm in thickness may be needed. With mineral wool, it is also difficult to meet the ecological demands.

For the coating of walls, ceilings or the like in different interiors, various fibre-based coatings are known, which are sprayed or applied in another way and which provide a mechanical surface structure that is more elastic and durable than glass and rock-based coatings, and which can also contribute to the acoustics of the premises.

For example, FI 95041 and WO 2007/063178 disclose natural fibre-based coatings that are sprayed onto a surface as aqueous mixtures, or applied in another similar manner, and hardened through drying. The fibre of the coating of FI 95041 comprises fine cellulose fibre. In the solution of WO2007/063178, in addition to the fibre material and the binder, the coating includes particle-like, typically mineral-based fillers, by means of which the surface of the coating becomes smooth and which can adjust its acoustic properties.

However, there is a growing need in the field for acoustic elements that are rather easy and cheap to produce while still maintaining good acoustic and mechanical properties.

### Brief description of the invention

It is an object of the present invention to provide a method for manufacturing an advanced and improved acoustic element or panel for improving the acoustic properties of interior spaces.

Particularly, the invention is based on combining a perforated gypsum plasterboard and an acoustic mass together to provide an acoustic element with combined superior properties of both aforementioned.

More specifically, the process of the present invention is characterized by what is presented in the characterizing part of claim 1 and the acoustic element is characterized by what is presented in the characterizing part of claim 7. The use of such element is characterized by what is presented in claim 15.

The present invention has various advantages over state of the art solutions. One particular advantage is that by the present method it is possible to produce light-weighted acoustic elements, which are rigid and have high mechanical strength. In addition, the acoustic properties of such elements are excellent providing even 3-times better absorption values in a wide frequency level range compared to state of the art perforated gypsum plasterboards.

### Brief description of the drawing

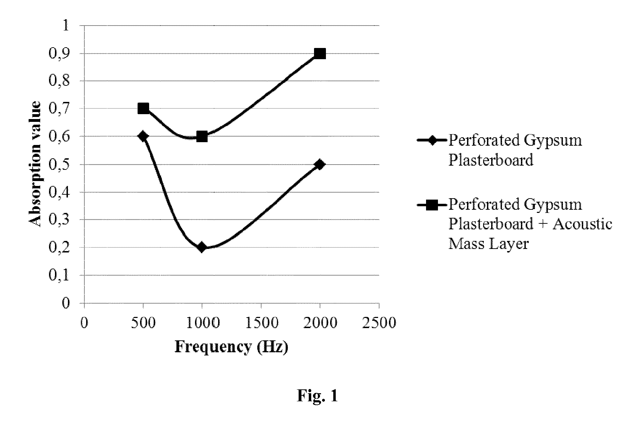

Figure 1 is a diagram describing the acoustic properties of two acoustic elements. The element according to the present invention comprises a perforated gypsum plasterboard having a perforation rate of 36 % and an acoustic mass layer of 5 mm on one surface of the board, wherein the holes of the board are filled with said acoustic mass, whereas the other element is a normal perforated gypsum plasterboard having a perforation rate of about 15-19 %, without acoustic mass layer nor filling.

### Detailed description of embodiments of the invention

The process of the present invention comprises at least two stages, wherein a first step a perforated gypsum plasterboard with evenly distributed holes of pre-determined size is produced. This first step is generally known in the art and a skilled person in the field is able to conduct it with known methods. In addition, the process comprises at least a second step, wherein an acoustic mass is spread onto the gypsum board forming a thin acoustic mass layer, i.e. coating to at least on one surface of the board. The surface may be either bottom or top, or both, of the gypsum plasterboard. Most suitably, the surface whereto the acoustic mass is spread is the one that remains visible after the element has been installed to the subj ect in question.

"Evenly distributed holes" herein means that the holes are at least essentially thoroughly distributed throughout the gypsum plasterboard in a way that the distance between the holes is equal or close to equal. The holes may be of a different size and shape.

According to a preferred embodiment said holes of the produced gypsum plasterboard are filled, or at least partially filled, with said acoustic mass, thereby making the element structure more solid and providing good acoustic properties while also keeping the element light-weighted. Thus, filling of the holes of the perforated gypsum plasterboard with acoustic mass furthermore strengthens the element structure and improves its rigidity.

"Partially filled" herein means that at least 70 %, preferably 80 %, more preferably 90 % and most suitably 95-100 % (by volume) of the holes of the gypsum board are filled. Most importantly the surface of the acoustic mass layer needs to be plane and even. There might, however, be areas inside the holes which are not entirely filled with the acoustic mass.

It is generally known in the art that perforated gypsum boards function rather well in low frequency levels because of their resonator structure. Their absorption values are defined e.g. by the size and surface area of the holes and by the thickness and weight of the board. It is also known that if the relative proportion of the holes exceeds 20 % from the total surface area of a gypsum plasterboard (with a thickness of 12,5 mm), the structure will lose its strength and eventually crack and break down. Thicker gypsum boards (20 mm and above) on the other hand can have higher perforation rate, but the elements are consequently heavier and thus not applicable for ceiling installations. However, the acoustic properties of the gypsum plasterboard improve when perforation rate increases.

In the present invention gypsum boards can be perforated to a higher rate. According to a preferred embodiment the relative proportion of the holes is over 25 %, even up to 50 %, but preferably in a range of 30 to 40 % from the total surface area of the gypsum plasterboard. According to the present invention the acoustic mass, which is layered on the surface of the perforated gypsum board, is able to provide a rigid acoustic element with good mechanical strength and thus cracking/breaking of the board can be avoided. The combination of the present invention, i.e. a gypsum plasterboard with a high perforation rate together with thin acoustic mass layer, is able to provide excellent acoustic properties and high absorption values in a wide frequency level range (500 - 2000 Hz).

In the present invention the average surface area of a single hole (4) of the gypsum board is between 0.25 cm² and 4 cm², but most suitably around 1 cm². For example holes with a diameter of 8 mm can be used. It is also preferred to use namely gypsum boards, because gypsum is easier to die cut and the material itself is cheaper compared to for example wood. In addition, gypsum boards are fire-safe materials whereas wood and plastic boards easily catch fire and bum. Manufacturing methods of perforated gypsum boards are generally known in the art.

According to one embodiment of the present invention the acoustic mass layer of the element is subjected to pressure, for example by using a roll, to adjust the density and thereby forming the acoustic characteristics of the final element structure. Thus, the acoustic mass layer of the gypsum plasterboard is compressed to a thickness in a range of 1 mm to 30 mm, preferably 1 mm to 20 mm and most suitably 5 mm to 10 mm.

According to one embodiment of the invention, the process includes the steps of:
- producing a perforated gypsum plasterboard, wherein the thickness of the board is 12,5 mm and the relative proportion of holes is 30 % to 40 % per surface area of the gypsum plasterboard,
- spreading an acoustic mass layer at least on one surface of the gypsum plasterboard and filling the holes with said acoustic mass, which comprise natural cellulose-based fibrous matter,
- compressing the acoustic mass layer to thickness ranging from 1 mm to 20 mm, and
- drying the element.

According to another embodiment the acoustic mass is wet when spread onto the gypsum plasterboard and spreading is done by means of spraying or mechanically spreading for example with a roll or a spatula or such. In addition, the acoustic mass preferably incorporates one or more binders for binding the acoustic mass together and into the gypsum plasterboard and thus supports the formation of a single solid element

According to a further embodiment, the thickness of the perforated gypsum plasterboard is 6 mm, thus making the element even lighter. Such gypsum plasterboards are not used in the prior art for similar technical purpose, because of their poor mechanical properties.

"Acoustic mass" is herein intended to mean a compound, a composition or a mixture of acoustic materials, capable of absorbing sound waves sufficiently or has a frequency response of a suitable form, thus being responsible for the acoustic properties in higher frequencies. Gypsum plasterboards on the other hand are responsible for the acoustic properties in lower frequencies. The present invention is thus based on the combination of both.

Organic materials such as natural fibrous matter including cellulose-based materials like e.g. wood pulp, recycled paper or cardboard mass, or inorganic materials such as plastic grains, mineral wool, fibreglass or rock wool, or any mixture or combination thereof, can be used as an acoustic mass. Preferably, the acoustic mass is cellulose-based natural fibrous matter. Acoustic mass material can also be pre-treated with a binder(s) and/or a gluing agent(s) before applying it onto a surface. Pre-treatment may improve the adhering of the mass to the surface.

As being said above, plastic grains can also be used as an acoustic material. They are preferably formed of expandable polymers, such as polyethylene, polyurethane, polystyrene, cellulosic derivatives, or copolymers thereof, particularly in cross-linked form, preferably a cross-linked polyethylene. Alternatively, such previously modified cellular grains can be used, particularly of a closed-cell type, whereby no air or sound-waves can penetrate the "walls" of the grains. Suitable plastic grains and acoustic filler compositions are described for example in the Finnish patent application FI 20115032 (or WO 2012/095562).

According to a further option, flame-proofed alternatives of said polymeric materials are used already in the cross-linking stage of the polymers, whereby it will not be necessary to add fire retardants as additive(s) in later stages of production.

In addition to these cellular grains, the final structure can optionally contain also plastics or other polymers in other forms (particularly selected from non-expandable polymers). These can function, among others, as binders, further fillers, fire retardants, functionalizing agents or curing agents.

The binder(s) of the present structure can be 1-component or 2-component binders, and are preferably selected from dispersion-type and dry (powdery) glues, particularly being essentially insoluble in water at room temperature, instead forming dispersions. Examples of suitable binders are carboxy-methyl cellulose, hydroxypropyl cellulose, methyl cellulose, ethylene vinyl acetate, polyvinyl alcohol, polyvinyl acetate, polyvinyl chloride, polyolefins, various starches and latexes, as well as derivatives and mixtures thereof, preferably being of the dispersion type, such as 1- or 2-component dispersion glues, particularly selected from the described olefin or vinyl polymers. The binder is typically used in a content of 1-15 % by weight, preferably 1-10 % by weight. According to one embodiment resin-based binders are used.

Further additives can be included into the acoustic mass of the invention, either before or during the manufacture. These can include, for example, one or more fire retardants, preferably selected from the group of magnesite, boron-based substances, such as boric acid or borax or a mixture thereof, hydroxides, such as aluminum or magnesium hydroxide or a mixture thereof, most suitably in an amount of 1 to 20 % by weight of the acoustic material/mass. Also one or more curing agents can be used to chemically cure the binder.

The density and rigidity of the element can be adjusted by subjecting the acoustic mass layer to pressure, for example by using a roll, to adjust the acoustic properties according to different acoustic requirements. A more dense structure might have e.g. a lower level of sound absorption than a more porous structure, while the porous structure might be more flexible.

Most suitably the relative frequency response of the sound absorption (of a part of an interior wall or a ceiling of a space) is adjusted to correspond to a predefined frequency response.

In addition, one further advantage of the acoustic elements of the present invention is that the improved mechanical strength makes their surface harder and thus less vulnerable to for example hitting damages. In addition, during installation of the element to a wall or ceiling or such, seams between the elements can be easily concealed by spraying or mechanically spreading e.g. with a spatula or a roll or such, the same acoustic mass that was used in the present process to said seams.

The elements of the present invention can also be used as construction elements/boards e.g. to replace generally used gypsum plasterboards, while at the same time providing acoustic properties to a space where the elements are installed at. It is noteworthy, however, that when acoustic properties are required from the element, an air gap between the element and the wall or ceiling to be attached is required. Such gap can be for example in a range of 20 mm to 500 mm, depending on the required acoustic properties and the space itself. The present invention thus provides considerable advantages and adjustability for the various needs of construction industry.

The invention is not intended to be limited only to the preferred embodiments presented above or the examples below, but can freely be implemented within the scope of the claims.

### Example 1. Mechanical characteristics

The characteristics and performance of gypsum plasterboards according to the present invention were tested and specified according to EN 520 standard. Table 1 below presents the flexural strength of a normal (i.e. having a thickness of 12,5 mm) perforated plasterboard having 0 8 mm round-like holes (experiments 1-3) compared to coated plasterboards according to the present invention, wherein the holes have been enlarged (up to 0 10 mm) and filled with an acoustic mass and wherein the board is coated with an acoustic mass layer of 5 mm (exp. 4-6). In addition, table 1 shows the results for similarly perforated and coated gypsum plasterboard having a thickness of only 6 mm (exp. 7-9). Table 1. Mechanical characteristics of non-coated and coated perforated gypsum plasterboards.

| | **length** | **width** | **max. force** | **max. transition** | **Type of the gypsum plasterboard** |
|---|---|---|---|---|---|
| **Exp.** | mm | mm | kN | mm | |
| **1** | 404 | 301 | 0.4222 | -4.98 | Normal (board thickness of 12,5 mm) |
| **2** | 403 | 304 | 0.4192 | -5.05 | Normal (board thickness of 12,5 mm) |
| **3** | 404 | 304 | 0.4241 | -5.18 | Normal (board thickness of 12,5 mm) |
| **4** | 401 | 303 | 0.5793 | -7.23 | Coated (board thickness of 12,5 mm) |
| **5** | 403 | 285 | 0.4856 | -6.54 | Coated (board thickness of 12,5 mm) |
| **6** | 403 | 285 | 0.5118 | -6.66 | Coated (board thickness of 12,5 mm) |
| **7** | 400 | 297 | 0.2929 | -9.64 | Coated (board thickness of 6 mm) |
| **8** | 400 | 296 | 0.1822 | -11.12 | Coated (board thickness of 6 mm) |
| **9** | 405 | 296 | 0.1829 | -8.22 | Coated (board thickness of 6 mm) |

Based on the results it is clear, that a perforated 12,5 mm gypsum plasterboard that has been coated according to the process of the present invention is stronger than a non-coated one. Even a coated board having a thickness as low as 6 mm is rigid enough to be used as a part of an interior wall or a ceiling of a space.

### Example 2. Acoustic characteristics

Another test and comparison was made between absorption values. The element, which comprises a perforated gypsum plasterboard having a perforation rate of about 36 % and a hole size of Ø 8 to 10 mm, wherein the holes of the board are filled with an acoustic mass, and an acoustic mass layer of 5 mm has superior acoustic properties compared to normal perforated gypsum plasterboard having a perforation rate of 15-19 % and a hole size of Ø 8 mm, as can be seen from figure 1. The most noticeable difference (3-times increase) is seen at a frequency level of 1000 Hz, wherein the present element has an absorption value of 0.6 and the normal element only 0.2. This frequency level is also one of the most important, because most of the public interior spaces such as shopping malls and schools belong to that category. The elements of the present invention are aimed for example to be used in such spaces.

## Claims

1. A process of manufacturing a plate-like acoustic element, comprising a step of producing a perforated gypsum plasterboard having holes of pre-determined size, **characterized by** comprising at least a second step of spreading an acoustic mass onto the gypsum plasterboard and forming an acoustic mass layer at least on one surface of the gypsum plasterboard, and at least partially filling said holes with said acoustic mass.

2. The process according to claim 1, **characterized by** spreading a wet cellulose-based acoustic mass onto a surface of the gypsum plasterboard, wherein said mass incorporates one or more binders for binding the acoustic mass together and into the gypsum plasterboard.

3. The process according to claim 1 or 2, **characterized by** spreading the acoustic mass onto the gypsum plasterboard mechanically or by spraying, followed by drying the element.

4. The process according to any of the preceding claims, **characterized by** subjecting the acoustic mass layer of the element to pressure, for example by using a roll, to adjust the density and thus forming the acoustic characteristics of the final element structure.

5. The process according to any of the preceding claims, **characterized by** compressing the acoustic mass layer of the gypsum plasterboard to a thickness in a range of 1 mm to 30 mm, preferably 1 mm to 20 mm and most suitably 5 mm to 10 mm.

6. The process according to any of the preceding claims, **characterized by** adjusting the relative proportion of the holes on the gypsum plasterboard to a value in a range of 25 % to 50 %, preferably 30 % to 40 %, per surface area of the gypsum plasterboard.

7. A plate-like acoustic element comprising a gypsum plasterboard and an acoustic mass layer at least on one surface of the gypsum plasterboard, **characterized in that** the gypsum plasterboard comprises holes of pre-determined size filled with an acoustic mass.

8. The element according to claim 7, **characterized in that** the thickness of the acoustic mass layer is in a range of 1 mm to 30 mm, preferably 1 mm to 20 mm and most suitably 5 mm to 10 mm.

9. The element according to claim 7 or 8, **characterized in that** the element has an absorption value a of at least 0.60 at a frequency level from 500 to 2000 Hz.

10. The element according to any of claims 7 to 9, **characterized in that** the thickness of the gypsum plasterboard is in a range of 6 mm to 12,5 mm.

11. The element according to any of claims 7 to 10, **characterized in that** surface area of a single hole of the gypsum plasterboard is in a range of 0.25 cm² to 4 cm², preferably about 1 cm².

12. The element according to any of claims 7 to 11, **characterized in that** the total surface area of the holes is in a range of 30 % to 40 % per surface area of the gypsum plasterboard.

13. The element according to any of claims 7 to 12, **characterized in that** the acoustic mass is organic or inorganic material, preferably comprising cellulose-based natural fibrous matter, such as recycled paper mass, or plastic grains, mineral wool, fiberglass or rock wool, or a combination thereof.

14. The element according to any of claims 7 to 13, **characterized in that** the acoustic mass further comprises one or more binders selected from a group of carboxy-methyl cellulose, hydroxypropyl cellulose, methyl cellulose, ethylene vinyl acetate, polyvinyl alcohol, polyvinyl acetate, polyvinyl chloride, polyolefins, and starch, as well as mixtures thereof.

15. The element according to any of claims 7 to 14, **characterized in that** it further comprises a fire retardant and an anti-rot agent, selected from a group of magnesite, boron-based substances, such as boric acid or borax or a mixture thereof, hydroxides, such as aluminium or magnesium hydroxide or a mixture thereof, or absorbing agents, such as talc or calcium carbonate or a mixture thereof, most suitably boric acid or borax, particularly a mixture thereof, in an amount of 1 to 20 % by weight of the acoustic mass.

16. Use of the element according to any of claims 7 to 15 as a part of an interior wall or a ceiling of a space to adjust the relative frequency response of the sound absorption of the space to correspond to a predefined frequency response.
